# EUROPÄISCHE PATENTANMELDUNG

(11) **EP 4 498 304 A1**
(43) Veröffentlichungstag der Anmeldung: **29.01.2025**
(21) Anmeldenummer: 23188308.3
(22) Anmeldetag: 28.07.2023
(51) Int. Cl.: G06Q 10/0631

(54) **COMPUTERIMPLEMENTIERTES VERFAHREN ZUR ERMITTLUNG EINES AUFSTELLORTES FÜR WENIGSTENS EINE LADESÄULE FÜR ELEKTRISCHE FAHRZEUGE, VERFAHREN ZUM AUFSTELLEN VON LADESÄULEN AN WENIGSTENS EINEM AUFSTELLORT, RECHENVORRICHTUNG, COMPUTERPROGRAMM UND ELEKTRONISCH LESBARER DATENTRÄGER**

(71) Anmelder: Siemens Aktiengesellschaft, 80333 München (DE)
(72) Erfinder: Husarek, Dominik, 81373 München (DE); Li, Gen, 80939 München (DE); Tomaselli, Domenico, 81673 München (DE)
(74) Vertreter: Siemens Patent Attorneys

(57) **Zusammenfassung**

Die Erfindung betrifft ein computerimplementiertes Verfahren zur Ermittlung eines Aufstellortes für wenigstens eine Ladesäule für elektrische Fahrzeuge in einem abgedeckten räumlichen Gebiet (3), insbesondere einem Stadtgebiet, wobei ein Optimierungsproblem (16) mit einer zu optimierenden Kostenfunktion formuliert und in einem Optimierungsvorgang zur Ermittlung des Aufstellortes gelöst wird, aufweisend folgende Schritte:
- Bereitstellen von geodätischen Daten (12), die die Positionen bereits installierter Ladesäulen, die Positionen von Orten von Interesse, die Positionen (1, 2, 10a, 10b, 10c) von Endnutzer-Transformatoren eines Stromnetzes und die Landnutzung, insbesondere hinsichtlich des Vorliegens von Parkbereichen, in dem Gebiet (3) beschreiben,
- Ermittlung von Kandidatenpositionen (6, 7, 9a, 9b, 9c) für den Aufstellort aus den geodätischen Daten (12),
- in einem Vorbereitungsvorgang Ableiten von deterministischen Parametern aus den geodätischen Daten (12), die neben wenigstens einem unbekannten Parameter, der nicht aus den geodätischen Daten (12) herleitbar ist, in die Kostenfunktion eingehen, für die Kandidatenpositionen (6, 7, 9a, 9b, 9c), und
- Definieren des Optimierungsproblems (16) aus den deterministischen Parametern und dem wenigstens einen unbekannten Parameter,
- wobei zur Berücksichtigung des wenigstens einen unbekannten Parameters ein stochastisches Optimierungsverfahren angewendet wird.

## Beschreibung

Die Erfindung betrifft ein computerimplementiertes Verfahren zur Ermittlung eines Aufstellortes für wenigstens eine Ladesäule für elektrische Fahrzeuge in einem abgedeckten räumlichen Gebiet, insbesondere einem Stadtgebiet, wobei ein Optimierungsproblem mit einer zu optimierenden Kostenfunktion formuliert und in einem Optimierungsvorgang zur Ermittlung des Aufstellortes gelöst wird. Daneben betrifft die Erfindung ein Verfahren zum Aufstellen von Ladesäulen an dem wenigstens einen Aufstellort, eine Rechenvorrichtung, ein Computerprogramm und einen elektronisch lesbaren Datenträger.

Als Kraftfahrzeuge werden zunehmend rein elektrische Fahrzeuge, beispielweise als Personenkraftwagen, Busse oder Transporter, eingesetzt, die eine Batterie aufweisen, die an entsprechenden Ladeeinrichtungen zu laden ist. Öffentlich zugängliche und nutzbare Ladeeinrichtungen werden als Ladesäulen oder auch Ladestationen bezeichnet. Sie werden beispielsweise an öffentlichen Parkplätzen aufgestellt, insbesondere an oder benachbart Orten von Interesse (POIs - Points of Interest). POIs können beispielsweise Sehenswürdigkeiten, Gastronomische Orte, Supermärkte und sonstige Läden, Parks und dergleichen umfassen.

Mit der steigenden Zahl elektrischer Fahrzeuge steigt auch die Zahl zu installierender Ladesäulen. Insbesondere ist eine hinreichende Anzahl an Ladesäulen in einem Gebiet essentiell für die fortschreitende Elektrifizierung von dessen Verkehr. Dabei werden Ladesäulen von gewinnorientierten Unternehmen bereitgestellt. Um geeignete Aufstellorte zu finden, ist es nicht nur wichtig, die erwartete Nutzung möglichst gut abzuschätzen, sondern auch, die Anbindung an das Stromnetz, aus dem die Ladesäulen gespeist werden, zu beurteilen. Üblicherweise werden die Ladesäulen hierbei an die Endnutzer-Transformatoren angeschlossen, die auch als Niedrigspannungs-Substationen oder sekundäre Substationen bekannt sind. Endnutzer-Transformatoren sind Stationen, in denen von einer Mittelspannung auf eine Niedrigspannung für die Endnutzer transformiert wird.

Zu dem hier beschriebenen technischen Problem, das auch als EVCSAP ("electric vehicle charging station allocation planning") bekannt ist, sind im Stand der Technik bereits Ansätze bekannt, um technisch sinnvolle Aufstellorte für Ladesäulen, die auch einen Gewinn für die jeweiligen Unternehmen darstellen, zu ermitteln und zu nutzen. Derartige bekannte Verfahren können beispielsweise Optimierungsvorgänge umfassen, die die jeweiligen monetären Gewinne zu maximieren suchen. Für diese Optimierungsvorgänge wird ein Optimierungsproblem (auch: Optimierungsprogramm bzw. Optimierungsmodell) zusammengestellt, das eine Kostenfunktion und Randbedingungen umfasst und beispielsweise einem Lösungsalgorithmus (Solver) übergeben werden kann.

EP 4 184 421 A1 offenbart ein Verfahren zur Ermittlung von Aufstellorten für Ladesäulen für elektrische Fahrzeuge. Hierbei werden zunächst potentielle Aufstellorte bereitgestellt, wonach das Gebiet, in dem die Aufstellorte ermittelt werden sollen, in mehrere Rasterelemente aufgeteilt wird. Anhand von Potenzialwerten der Rasterelemente, die anzeigen, wie vorteilhaft das Platzieren von Ladesäulen im jeweiligen Rasterelement ist, werden zunächst in einem ersten Auswahlschritt sinnvolle Rasterelemente ausgewählt und dann die potentiellen Aufstellorte mittels einer Gewichtung für die Rasterelemente gewichtet. In einem zweiten Auswahlschritt ausgewählte Aufstellorte können als Startlösung für eine anschließende mathematische Optimierung verwendet werden.

Ein Problem bei der Auswahl von Aufstellorten für Ladesäulen ist oft das Wissen über die mögliche Anbindung an das Stromnetz. Beispielsweise sind Informationen hinsichtlich der Nutzung und des Anschlusses an Endnutzer-Transformatoren, genau wie Kapazitäten an den potentiellen Aufstellorten, insbesondere die Information, wie viele Ladesäulen angeschlossen werden können, nützlich. Diese Informationen sind jedoch üblicherweise nur für den Betreiber des Stromnetzes verfügbar. Die Unsicherheit hinsichtlich der Verbindung in das Stromnetz kann eine Hürde für eine schnelle zusätzliche Verteilung von Ladesäulen in Gebieten, insbesondere Stadtgebieten, sein. Die Transaktionskosten werden zudem erhöht, da der Betreiber des Stromnetzes schon in einer frühen Planungsphase einbezogen werden muss. Diese zusätzlichen Kosten und Aufwände führen zu einer Reduzierung der Aufstellorte, die tatsächlich bewertet werden, was wiederum zu suboptimalen Allokationen aufgrund beschränkten Lösungsraums führen kann. Zwar wurden im Stand der Technik auch bereits Optimierungsverfahren vorgeschlagen, die die Anbindung an das Stromnetz überhaupt nicht berücksichtigen, jedoch liefern diese Lösungsansätze ebenso suboptimale Allokationen.

Der Erfindung liegt daher die Aufgabe zugrunde, eine demgegenüber verbesserte, insbesondere den Aufwand und die nötige Datenbasis reduzierende, Möglichkeit zum Auffinden geeigneter Aufstellorte für Ladesäulen in einem räumlichen Gebiet anzugeben.

Diese Aufgabe wird erfindungsgemäß gelöst durch ein computerimplementiertes Ermittlungsverfahren, ein Aufstellverfahren, eine Rechenvorrichtung, ein Computerprogramm und einen elektronisch lesbaren Datenträger gemäß den unabhängigen Patentansprüchen. Vorteilhafte Ausgestaltungen ergeben sich aus den Unteransprüchen.

Ein erfindungsgemäßes computerimplementiertes Verfahren zur Ermittlung eines Aufstellortes für wenigstens eine Ladesäule für elektrische Fahrzeuge in einem abgedeckten räumlichen Gebiet, insbesondere einem Stadtgebiet, wobei ein Optimierungsproblem mit einer zu optimierenden Kostenfunktion formuliert und in einem Optimierungsvorgang zur Ermittlung des Aufstellortes gelöst wird, weist folgende Schritte auf:
- Bereitstellen von geodätischen Daten, die die Positionen bereits installierter Ladesäulen, die Positionen von Orten von Interesse, die Positionen von Endnutzer-Transformatoren eines Stromnetzes und die Landnutzung, insbesondere hinsichtlich des Vorliegens von Parkbereichen, in dem Gebiet beschreiben,
- Ermittlung von Kandidatenpositionen für den Aufstellort aus den geodätischen Daten,
- in einem Vorbereitungsvorgang Ableiten von deterministischen Parametern aus den geodätischen Daten, die neben wenigstens einem unbekannten Parameter, der nicht aus den geodätischen Daten herleitbar ist, in die Kostenfunktion eingehen, für die Kandidatenpositionen,
- Definieren des Optimierungsproblems aus den deterministischen Parametern und dem wenigstens einen unbekannten Parameter,
- wobei zur Berücksichtigung des wenigstens einen unbekannten Parameters ein stochastisches Optimierungsverfahren angewendet wird.

Es wird mithin ein datengetriebenes Ermittlungsverfahren für Aufstellorte von Ladesäulen (Ermittlungsverfahren) vorgeschlagen, welches auf geodätischen Daten, welche gut verfügbar sind, basiert. Die geodätischen Daten beschreiben die Orte aller für die Auswahl relevanten Objekte bzw. die Landnutzung im abgedeckten räumlichen Gebiet, welches bevorzugt ein Stadtgebiet ist. Diese relevanten Orte umfassen dabei im Rahmen der Landnutzung insbesondere Parkbereiche, also Parkflächen, die als Aufstellorte für Ladesäulen hauptsächlich in Betracht kommen. Daneben beschreiben die geodätischen Daten bereits existierende Ladesäulen und Orte von Interesse (POIs), die Personen und somit elektrische Fahrzeuge, um diese Orte von Interesse zu erreichen, anziehen, mithin den Bedarf lokalisiert besonders beeinflussen. Relevant für die grundlegenden physikalischen und technischen Gegebenheiten, auf deren Analyse die erfindungsgemäße Vorgehensweise beruht, sind ferner die Endnutzer-Transformatoren, die als Anschlussmöglichkeit für Ladesäulen an das Stromnetz dienen. Die geodätischen Daten können beispielsweise aus einem Geoinformationssystem abgerufen werden und/oder amtliche Daten umfassen, insbesondere was bestehende Ladesäulen angeht.

Die geodätischen Daten (sowie gegebenenfalls wenigstens eine Hintergrundinformation) werden in weiteren Schritten des erfindungsgemäßen Ermittlungsverfahrens nun ausgewertet, zunächst, um mögliche Kandidatenpositionen für Aufstellorte zu bestimmen, mithin wenigstens einen Teil des Lösungsraums zu definieren. Hierbei werden als Kandidatenpositionen vorteilhaft Parkbereiche herangezogen, worauf im Folgenden noch genauer eingegangen werden wird.

Zum anderen werden die geodätischen Daten (sowie gegebenenfalls wenigstens eine Hintergrundinformation) auch ausgewertet, um das Optimierungsproblem, insbesondere als ein Optimierungsmodell, so zu definieren, dass es das räumliche Gebiet physikalisch und technisch sinnvoll wiedergibt und somit eine Grundlage bildet, um durch einen Lösungsalgorithmus (Solver) gelöst zu werden, der den wenigstens einen optimalen Aufstellort als Ergebnis ausgibt, mithin schlussendlich den Aufstellort (als optimale Lösung) ermittelt. Dabei wird vorgeschlagen, wenigstens einen Teil der Unsicherheiten, also unbekannten Informationen, durch eine stochastische Optimierung aufzulösen, insbesondere im Rahmen der Definition des Optimierungsproblems.

Mithin werden aus den geodätischen Daten zunächst als bekannt oder bestimmbar angenommene, deterministische Parameter für das Optimierungsproblem bestimmt. Auch hinsichtlich der weiteren, als unbekannt angenommenen, mithin stochastische betrachteten, unbekannten Parameter kann im Übrigen selbstverständlich eine Vorberechnung erfolgen, worauf im Folgenden noch näher eingegangen werden wird. Sowohl die deterministischen als auch die unbekannten Parameter definieren das Optimierungsproblem, gehen mithin wenigstens in die Kostenfunktion ein. Nachdem in den meisten Fällen auch wenigstens eine Randbedingung Teil des Optimierungsproblems bildet, können die deterministischen und/oder die unbekannten Parameter selbstverständlich auch in die Randbedingungen eingehen und diese definieren. Nach Definition (Formulierung) des Optimierungsproblem wird dieses dann gelöst, insbesondere mittels eines Lösungsalgorithmus (Solvers), um den Aufstellort als die Kandidatenposition der optimalen Lösung zu ermitteln. Neben dem Aufstellort können auch weitere Größen, beispielsweise eine Zahl von an dem Aufstellort zu installierenden Ladesäulen, ermittelt werden, die die optimale Lösung dann entsprechend enthält. Die optimale Lösung, umfassend den Aufstellort, kann ausgegeben werden.

Mit anderen Worten wird wenigstens eine Unsicherheit in der technischen Abbildung der zu beurteilenden Situation in dem abgedeckten räumlichen Gebiet durch eine stochastische Optimierung adressiert. Auf diese Weise kann eine verbesserte Entscheidung für Aufstellorte in einem räumlichen Gebiet ohne vollständige Kenntnis der physikalischen und technischen Gegebenheiten erreicht werden, insbesondere im Hinblick auf die Anbindung an das Stromnetz. Dies vereinfacht und verbessert die Auswahl und reduziert Aufwand und Kosten, insbesondere hinsichtlich der Informationsbeschaffung.

In zweckmäßiger, bevorzugter Ausgestaltung der vorliegenden Erfindung wird eine zweistufige stochastische Optimierung genutzt. Konkret kann vorgesehen sein, dass ein zweistufiges stochastisches Optimierungsverfahren verwendet wird, bei dem in der ersten Stufe wenigstens eine Kandidatenposition gewählt wird und in der zweiten Stufe bei Nichterfüllbarkeit von Anforderungen durch das Stromnetz und/oder von Anforderungen bezüglich zu ladender Fahrzeuge ein, insbesondere auf der Verwendung einer Backstop-Technologie basierender, Strafterm in der Kostenfunktion verwendet wird. Hierbei ist hinsichtlich der ersten Stufe zweckmäßig vorgesehen, dass zusätzlich zu der Kandidatenposition wenigstens eine weitere Größe, die die durch die wenigstens eine Ladesäule bereitstellbare Ladeleistung beschreibt, in der ersten Stufe gewählt wird, wobei die weitere Größe insbesondere eine Zahl von Ladesäulen betrifft. Insbesondere kann also die erste Stufe die Wahl einer Kandidatenposition nebst der Zahl an dieser Kandidatenposition zu installierender Ladesäulen als Lösungskandidat betreffen. Wird sodann festgestellt, dass das Stromnetz dort die Anforderung nicht erfüllen kann, betrifft die zweite Entscheidung in der zweiten Stufe bevorzugt die Nutzung einer Backstop-Technologie, beispielsweise eines Dieselgenerators und/oder einer Batterie, um die Anforderung dennoch erfüllen zu können, was durch einen entsprechenden Strafterm in der Kostenfunktion berücksichtigt werden kann, wie grundsätzlich bekannt.

Mit besonderem Vorteil kann in diesem Zusammenhang vorgesehen sein, dass im Rahmen der Ermittlung der Kandidatenpositionen und/oder des Vorbereitungsvorgangs wenigstens eine Beschränkung für wenigstens eine der wenigstens einen weiteren Größe ermittelt und bei der Definition des Lösungsraums und/oder des Optimierungsproblems berücksichtigt wird. Beispielsweise kann anhand der Größe eines Parkbereichs, beispielsweise der Anzahl der verfügbaren Parkplätze (Abstellplätze für Fahrzeuge), eine Beschränkung ermittelt werden, was die Zahl der dort platzierbaren Ladesäulen angeht. Dies kann auch im Rahmen von ortsbezogenen Randbedingungen bei der Auswahl potentieller Lösungen berücksichtigt werden.

Wie bereits erwähnt, werden als Kandidatenpositionen bevorzugt Parkbereiche einer vorbestimmten Mindestgröße und/oder solche, die eine sonstige vorbestimmte Bedingung erfüllen, insbesondere Orten von Interesse zugeordnet sind und/oder weniger als eine vorbestimmte Anzahl von oder keine bereits installierten Ladesäulen aufweisen, gewählt. Eine vorbestimmte Mindestgröße kann gegeben sein, wenn der Parkbereich mehrere Parkplätze (also Abstellplätze) umfasst, insbesondere ein Schwellwert für die Parkplatzzahl überschritten ist.

Im Rahmen der Erfindung kann vorsehen sein, dass zur Ermittlung der Kandidatenpositionen und/oder der deterministischen Parameter wenigstens eine Hintergrundinformation, insbesondere betreffend die Nutzung von elektrischen Kraftfahrzeugen oder betreffend die Nutzung des Stromnetzes, verwendet wird und/oder dass zur Ermittlung wenigstens eines Teils der deterministischen Parameter wenigstens eine Simulation basierend auf den geodätischen Daten durchgeführt wird. Während es grundsätzlich denkbar ist, dass beispielsweise hinsichtlich des Besuchs von interessierenden Orten (POIs) tatsächliche Statistiken verfügbar sind, beispielsweise von großen, mehrere Dienste betreibenden Anbietern, aus welchen deterministische Parameter, insbesondere bezüglich des Bedarfs an Ladeleistung bzw. Ladeenergie, hergeleitet werden können, kann es in vielen Fällen auch sinnvoll sein, diese deterministischen Parameter über eine die physikalisch-technischen Gegebenheiten simulierende Simulation festzulegen.

Hierbei kann insbesondere vorgesehen sein, dass wenigstens eine Simulation gewählt aus der Gruppe umfassend
- eine Simulation des elektrische Fahrzeuge betreffenden Verkehrs und/oder von deren Ladezuständen und/oder von Aufenthaltszeiten, insbesondere bezogen auf die Orte von Interesse, und
- eine Simulation zur Auslastung des Stromnetzes, insbesondere bezüglich der zeitabhängig für Ladevorgänge von elektrischen Fahrzeugen bereitstehenden Leistung,
durchgeführt wird.

Derartige Simulationen bzw. Simulationsansätze sind grundsätzlich bereits bekannt und sind insbesondere hinsichtlich des Bedarfs und der verfügbaren Leistung für Ladevorgänge (verfügbare Ladeleistung) gangbare Wege zur Definition des Optimierungsproblems, die zumindest teilweise auch im Rahmen der vorliegenden Erfindung noch eingesetzt werden können. So kann sich beispielsweise eine Simulation auf die Ermittlung von Statistiken zu den interessierenden Orten (POI-Statistiken) beziehen, beispielsweise zur Ermittlung einer Anzahl von ankommenden elektrischen Fahrzeugen, deren Ankunfts-Ladezustand und/oder der Aufenthaltsdauer. Auf diese Weise wird, anders gesagt, der Ladebedarf mit interessierenden Orten, wie beispielsweise Supermärkten, Läden und/oder Restaurants, verknüpft. Konkret kann eine abstrakte Simulation, insbesondere also ohne Verkehrswegenetz, erfolgen. Ferner ist es denkbar, die verfügbare Ladeleistung, also die Belastung, von Endnutzer-Transformatoren durch Simulation zu ermitteln. Hierbei können insbesondere auch Hintergrundinformationen hinsichtlich sonstiger Verbraucher, insbesondere in Verbindung mit der Landnutzung gemäß den geodätischen Daten, herangezogen werden.

Was sonstige, insbesondere auch ohne Simulationen und/oder Hintergrundinformationen ermittelbare deterministische Parameter angeht, können diese beispielsweise Laufstrecken und/oder Laufzeiten von Kandidatenpositionen zu interessierenden Orten umfassen. Diese beschreiben letztlich, wie weit ladende Kunden, mithin Nutzer von elektrischen Fahrzeugen, von der Kandidatenposition zu interessierenden Orten, die sie besuchen wollen, laufen müssten, und somit die Attraktivität der Kandidatenposition.

In Ausführungsbeispielen ist es zudem denkbar, insbesondere basierend auf den Ergebnissen wenigstens wenigstens einer der Simulationen und den geodätischen Daten, Lastzentren zu ermitteln, die beispielsweise räumlich benachbarte POIs zusammenfassen können. Eine an einer Kandidatenposition installierte Lastsäule kann wenigstens ein Lastzentrum ganz oder teilweise versorgen. In Abhängigkeit der Distanz kann eine Kandidatenposition auch mehrere Lastzentren bedienen. Auf diese Weise kann die Modellierung vereinfacht und der zur Lösung des Optimierungsproblems erforderliche Aufwand reduziert werden.

Hinsichtlich der stochastischen Optimierung ist eine Anwendbarkeit auf eine Vielzahl von unbekannten Parametern denkbar. Konkret kann beispielsweise vorgesehen sein, dass der wenigstens eine unbekannte Parameter aus der Gruppe umfassend
- auf die elektrischen Fahrzeuge, insbesondere den Ladebedarf, bezogene Fahrzeugparameter, insbesondere die Zahl der elektrischen Fahrzeuge und/oder der Ladezustand eines mittels der wenigstens einen Ladesäule zu ladenden Energiespeichers und/oder den Verbrauch der elektrischen Fahrzeuge und/oder die Ausstattung der elektrischen Fahrzeuge, insbesondere hinsichtlich des Energiespeichers; und
- auf die Leistungsversorgung der wenigstens einen Ladesäule aus dem Stromnetz bezogene Parameter, insbesondere einen Endnutzer-Transformater, an den die Kandidatenposition angeschlossen ist, und/oder eine die Last an den Endnutzer-Transformatoren beschreibende Größe, insbesondere deren zeitlicher Verlauf, und/oder eine an den Endnutzer-Transformatoren bereitgestellte Leistung,
gewählt wird.

Während ist grundsätzlich also denkbar ist, auch Unsicherheiten hinsichtlich des Ladebedarfs durch stochastische Optimierung zu adressieren, sehen besonders bevorzugte Ausführungsbeispiele der vorliegenden Erfindung vor, dass der wenigstens eine unbekannte Parameter einen auf die Leistungsversorgung aus dem Stromnetz bezogenen Parameter, insbesondere einen Parameter, der einen Endnutzer-Transformator, an den die Kandidatenposition angeschlossen ist, beschreibt. So ist es möglich, eine fundierte Entscheidung hinsichtlich optimaler Aufstellorte für Ladesäulen ohne volle Kenntnis des Stromnetzes und dessen Kapazität an jedem Ort sowie der Verbindungen in das Stromnetz zu treffen. Bei unbekannten Parametern, die Endnutzer-Transformatoren, an die Kandidatenpositionen angeschlossen sind, beschreiben, wird besonders vorteilhaft auch die verfügbare Energiekapazität an möglichen zukünftigen Ladesäulen beschrieben. Anders gesagt werden in besonders vorteilhafter Ausgestaltung der vorliegenden Erfindung die Verbindung in das Stromnetz und konsequenterweise die verfügbare Ladeenergie an Kandidatenpositionen als das unsichere Element verwendet. Auf diese Weise wird insbesondere die eingangs diskutierte Zusatzinformation des Betreibers des Stromnetzes nicht mehr benötigt, sodass Aufwand, Transaktionskosten und insbesondere auch Zeit eingespart werden, was auch ein schnelleres Ergänzen der Lade-Infrastruktur im räumlichen Gebiet ermöglicht und so einen Wettbewerbs-Vorteil verschafft. Es wird trotz technischer Unsicherheiten eine robuste, umsetzbare und insbesondere monetären Gewinn erzielende Lösung aufgefunden.

Wie bereits erwähnt, sehen besonders vorteilhafte Ausführungsformen vor, dass das Optimierungsproblem auf der Grundlage eines Optimierungsmodells definiert wird, welches einen nichtstochastischen, aus den deterministischen Parametern unmittelbar ermittelbaren Modellanteil und einen stochastischen Modellanteil, der in einem Modellierungsvorgang ermittelt wird, umfasst. In einem solchen Ansatz wird ein nichtstochastischer (deterministischer) Anteil mithin durch die deterministischen Parameter unmittelbar definiert, während ein stochastischer Anteil in einem Modellierungsvorgang ermittelt wird, in dem insbesondere mögliche Szenarien hinsichtlich des wenigstens einen unbekannten Parameters, beispielsweise bei unbekannten Verbindungen von Kandidatenpositionen zu Endnutzer-Transformatoren Verbindungszenarien, erzeugt werden können und eine entsprechende Grundlage, insbesondere gemeinsam mit wenigstens einem Teil der deterministischen Parameter, für den stochastischen Anteil bilden können. In dem Modellierungsvorgang werden wenigstens die geodätischen Daten ausgewertet, insbesondere zusätzlich auch eine Hintergrundinformation und/oder wenigstens ein deterministischer Parameter. Mit anderen Worten kann, allgemein gesagt, im Modellierungsvorgang ein Szenario-Generator eingesetzt werden. Werden die erzeugten Szenarien kombiniert, ergibt sich der entsprechende stochastische Modellanteil. In diesem Zusammenhang kann es insbesondere zweckmäßig sein, die Szenarien so zu ermitteln, dass sie letztlich zumindest im Wesentlichen ähnlich wahrscheinlich, insbesondere technisch plausibel, sind, sodass dasselbe Gewicht für jedes der Szenarien angenommen werden kann.

Konkret kann hierbei vorgesehen sein, dass in dem Modellierungsvorgang, insbesondere basierend auf einer multinominalen Verteilung, Submodellszenarien (sub-model samples) für verschiedene Werte des wenigstens einen unbekannten Parameters, alle Kandidatenpositionen und das gesamte räumlichen Gebiet erzeugt und zur Bildung des stochastischen Anteils gewichtet kombiniert werden. Dies kann, wie bereits angedeutet, durch entsprechende Ausgestaltung eines Szenario-Generators derart erfolgen, dass eine gewisse technische Sinnhaltigkeit in jedem Fall gegeben ist und eine gleiche Gewichtung (average sample weighting) vorgenommen werden kann.

Bei Verwendung von Verbindungs-Parametern, die einen Endnutzer-Transformator, an den eine jeweilige Kandidatenposition angeschlossen ist, beschreiben, als unbekannte Parameter, kann eine besonders bevorzugte, konkrete Ausführungsform vorsehen, dass zur Erzeugung der Submodellszenarien, insbesondere als Verteilungsparameter der multinominalen Verteilung,
- Abstände von Kandidatenpositionen zu Endnutzer-Transformatoren, und
- Verbindungsinformationen hinsichtlich der Endnutzer-Transformationen für weitere, benachbarte Kandidatenpositionen,
verwendet werden. Ein solcher Szenario-Generator kann, insbesondere bei Verwendung der beiden genannten Verteilungsparameter, als abstandsbezogen zerfallende zweidimensionale Ladesäulen-mit-Endnutzer-Transformatoren-Verbindungszenario-Erzeugung mit Nachbarschaftseffekt bezeichnet werden. Insbesondere können die Verbindungsinformationen sich darauf beziehen, dass benachbarte Kandidatenpositionen, insbesondere Parkbereiche, mit hoher Wahrscheinlichkeit an denselben Endnutzer-Transformator angeschlossen werden (Nachbarschaftsbeziehung). Dies gilt insbesondere dann, wenn diese nah genug beieinander liegen. Letztlich werden also Annahmen miteinander abgestimmt, also in sich konsistente Submodellszenarien erzeugt. In einer konkreten Umsetzung können hier beispielsweise Abstandsgrenzen für Verbindungen zu Endnutzer-Transformatoren und/oder für an denselben Endnutzer-Transformator anzuschließende Kandidatenpositionen, und/oder Zerfallsfunktionen, die nichtlinear abnehmende Wahrscheinlichkeiten mit steigender Distanz beschreiben, und dergleichen verwendet werden. Auf einer solchen Grundlage ist also, allgemein gesagt, die Erzeugung technisch sinnvoller Submodellszenarien möglich, die insbesondere zur Bildung des stochastischen Anteils des Optimierungsmodells alle gleich gewichtet werden können, insbesondere mit dem Gewicht Eins geteilt durch die Zahl der erzeugten Submodellszenarien. Anders gesagt können die Unsicherheit berücksichtigende Verbindungszenarien zum Stromnetz für die Kandidatenpositionen und das räumliche Gebiet erzeugt und verwendet werden.

Die Kombination der Anteile zu dem Optimierungsproblem kann beispielsweise umfassen, dass aus dem deterministischen Anteil hergeleitete deterministische Terme der Kostenfunktion und aus dem stochastischen Anteil hergeleitete stochastische Terme der Kostenfunktion addiert werden, um diese zu bilden.

Hinsichtlich der Kostenfunktion kann vorgesehen sein, dass die Kostenfunktion zur Maximierung eines monetären Ertrags und/oder zur Minimierung der monetären Kosten formuliert wird. Grundsätzlich sind selbstverständlich auch andere Terme in der Kostenfunktion möglich, beispielsweise hinsichtlich einer Maximierung bereitstellbarer Ladeleistungen und dergleichen.

Zur Lösung des Optimierungsproblems kann vorzugsweise ein Sample Average Approximation-Verfahren verwendet werden. Dabei handelt es sich um einen bereits bekannten, effizienten Lösungsalgorithmus (Solver) für entsprechende, insbesondere stochastische Optimierungsprobleme. Beispielsweise wird ein solches Verfahren durch einen kommerziellen Solver namens CPLEX eingesetzt.

Wie grundsätzlich bekannt und bereits erwähnt, kann auch hier das Optimierungsproblem umfassend wenigstens eine, insbesondere wenigstens teilweise durch deterministische und/oder unbekannte Parameter definierte und/oder als Bestandteil des Modellanteils ermittelte, Randbedingung formuliert bzw. definiert werden. Randbedingungen können beispielsweise Beschränkungen der ursprünglichen Investition für neue Ladesäulen, Beschränkungen der Ladesäulenzahl, Mindestabstände zu bestehenden Ladesäulen, Beschränkungen hinsichtlich der elektrischen Fahrzeuge und deren Verhalten und dergleichen umfassen. Insbesondere kann eine erste Gruppe von Randbedingungen die Zuordnung von Ladesäulen zu Kandidatenpositionen beschränken und/oder regulieren und/oder eine zweite Gruppe von Randbedingungen die Anforderungen, wie das Optimierungsmodell Backstop-Technologien zur Milderung von Netzüberlastungen (grid congestion) nutzen soll, beschreiben.

In einem konkreten, zusammenfassenden Beispiel kann im Rahmen der Erfindung also zweistufige stochastische mixed-integer Programmierung für das Allokationsproblem eingesetzt werden, wobei das Problem unsicherer, mithin unbekannter, Stromnetzinformation, insbesondere Verbindungsinformation, durch "average sample approximation" (von Submodellszenarien) gelöst wird.

Neben dem Ermittlungsverfahren betrifft die Erfindung auch ein Aufstellverfahren, mithin ein Verfahren zum Aufstellen von Ladesäulen an wenigstens einem Aufstellort innerhalb eines räumlichen Gebiets, insbesondere eines Stadtgebiets, welches sich dadurch auszeichnet, dass der wenigstens eine Aufstellort durch ein erfindungsgemäßes Ermittlungsverfahren ermittelt wird. Dabei lassen sich sämtliche Ausführungen zum erfindungsgemäßen Ermittlungsverfahren auf das erfindungsgemäße Aufstellverfahren übertragen. Hierdurch werden die Ladesäulen an den ermittelten Aufstellorten installiert. Es ergeben sich die bereits genannten Vorteile.

Die Erfindung betrifft auch eine Rechenvorrichtung, die wenigstens einen Prozessor und wenigstens ein Speichermittel aufweist und zur Durchführung des erfindungsgemäßen Ermittlungsverfahrens, also des computerimplementierten Verfahrens zur Ermittlung wenigstens eines Aufstellortes, ausgebildet ist. Auch bezüglich der Rechenvorrichtung gelten die bereits genannten Ausführungen und Vorteile zum Ermittlungsverfahren entsprechend fort. Insbesondere kann es sich bei der Rechenvorrichtung um eine Planungsvorrichtung zur Planung von Aufstellorten für Ladesäulen handeln.

Die Schritte des erfindungsgemäßen Ermittlungsverfahrens können durch Funktionseinheiten der Rechenvorrichtung, die durch Hardware und/oder Software gebildet sein können, ausgeführt werden. So kann die Rechenvorrichtung insbesondere umfassen
- eine Schnittstelle zur Entgegennahme von geodätischen Daten, die die Positionen bereits installierter Ladesäulen, die Positionen von Orten von Interesse, die Positionen von Endnutzer-Transformatoren eines Stromnetzes und die Landnutzung, insbesondere hinsichtlich des Vorliegens von Parkbereichen, in dem Gebiet beschreiben,
- eine Ermittlungseinheit zur Ermittlung von Kandidatenpositionen für den Aufstellort aus den geodätischen Daten,
- eine Vorbereitungseinheit zum Ableiten von deterministischen Parametern für die Kandidatenpositionen aus den geodätischen Daten in einem Vorbereitungsvorgang, wobei die deterministischen Parameter neben wenigstens einem unbekannten Parameter, der nicht aus den geodätischen Daten herleitbar ist, in eine Kostenfunktion eines Optimierungsproblems eingehen,
- eine Definitionseinheit zur Zusammenstellung des Optimierungsproblems mit der zu optimierenden Kostenfunktion (und insbesondere wenigstens einer Randbedingung) aus den deterministischen Parametern und dem wenigstens einen unbekannten Parameter, und
- eine Optimierungseinheit zur Lösung des Optimierungsproblems in einem Optimierungsvorgang, um den wenigstens einen Aufstellort aus der optimalen Lösung zu ermitteln,
- wobei die Rechenvorrichtung ferner ausgebildet ist, zur Berücksichtigung des wenigstens einen unbekannten Parameters ein stochastisches Optimierungsverfahren anzuwenden.

Weitere Funktionseinheiten können für weitere denkbare Schritte, insbesondere die konkrete Umsetzung der stochastischen Optimierung, vorgesehen sein. Beispielsweise kann die Recheneinrichtung ferner eine Modellierungseinheit zur Ermittlung des stochastischen und des deterministischen Anteils des Optimierungsmodells umfassen, welche als Subeinheit einen Szenario-Generator aufweisen kann. In diesem Fall kombiniert die Definitionseinheit den stochastischen und den deterministischen Anteil des Optimierungsmodells zu dem Optimierungsmodells. Dabei sei an dieser Stelle noch angemerkt, dass selbst verständlich auch Randbedingungen in den entsprechenden Anteilen definiert werden können.

Ein erfindungsgemäßes Computerprogramm ist direkt in ein Speichermittel einer Rechenvorrichtung ladbar und weist Programmmittel auf, welche bei Ausführung des Computerprogramms die Rechenvorrichtung veranlassen, die Schritte eines erfindungsgemäßen Ermittlungsverfahrens durchzuführen. Das Computerprogramm kann auf einem elektronisch lesbaren Datenträger gemäß der vorliegenden Erfindung gespeichert sein, welcher mithin darauf gespeicherte Steuerinformation umfasst, die wenigstens ein erfindungsgemäßes Computerprogramm umfassen und bei Verwendung in einer Rechenvorrichtung diese ausbilden, ein erfindungsgemäßes Ermittlungsverfahren auszuführen.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Skizze, die eine Unsicherheit bei der Verbindung von Kandidatenpositionen mit einem Stromnetz erläutert,
- Fig. 2: einen Ablaufplan eines Ausführungsbeispiels des erfindungsgemäßen Ermittlungsverfahrens,
- Fig. 3: ein mögliches, vereinfachtes Submodellszenario,
- Fig. 4: eine Skizze zur Erläuterung der Datenverarbeitung im erfindungsgemäßen Verfahren, und
- Fig. 5: eine funktionale Skizze einer erfindungsgemäßen Rechenvorrichtung.

Im Folgenden wird ein Ausführungsbeispiel des erfindungsgemä-ßen Ermittlungsverfahrens zur Ermittlung optimaler Aufstellorte für Ladesäulen in einem abgedeckten räumlichen Gebiet, hier einem Stadtgebiet, erläutert, welches stochastische Optimierung im Hinblick auf unbekannte Parameter nutzt, die die Verbindung von Kandidatenpositionen, vorliegend Parkbereichen mit einer Mindestzahl von Parkplätzen, mit dem Stromnetz beschreiben. Die konkret berücksichtigte Unsicherheit bezieht sich darauf, dass nicht bekannt ist, an welchen Endnutzer-Transformator, also welche sekundäre Substation, eine Kandidatenposition angeschlossen ist. In anderen Beispielen kann beispielsweise zusätzlich oder alternativ die bereits anliegende Last am Stromnetz oder dergleichen betrachtet werden.

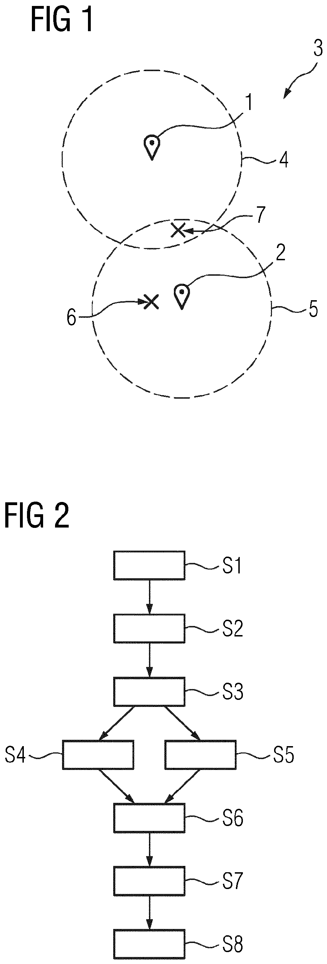

Dies wird durch Fig. 1 näher erläutert. Diese zeigt schematisch die Positionen 1, 2 von Endnutzer-Transformatoren in einem räumlichen Gebiet 3 sowie die angenommenen Abdeckungsbereiche 4, 5. Für eine erste Kandidatenposition 6, die recht nahe der Position 2 und nur im Abdeckungsbereich 5 liegt, ist es hoch wahrscheinlich, dass diese an den Endnutzer-Transformator an der Position 2 angeschlossen ist. Für die Kandidatenposition 7 allerdings, die sich weiter entfernt von beiden Positionen 1, 2 befindet und im Schnittbereich der Abdeckungsbereiche 4, 5 liegt, besteht jedoch eine Unsicherheit. Es ist nicht bekannt und aus den geodätischen Daten nicht sicher herleitbar, an welchen Endnutzer-Transformator sie angeschlossen ist. Im nun beschriebenen Ermittlungsverfahren wird diese Unsicherheit durch stochastische Optimierung adressiert.

Fig. 2 zeigt einen Ablaufplan des Ausführungsbeispiels. Dabei werden in einem Schritt S1 geodätische Informationen bereitgestellt, beispielsweise aus einem Geoinformationssystem und/oder einer Datenbank eines Amtes abgerufen. Konkrete denkbare Quellen umfassen die OpenStreetMap-Datenbank und vergleichbare Datenbanken. Die geodätischen Daten beschreiben die Positionen bereits installierter Ladesäulen, die Positionen von Orten von Interesse, die Positionen 1, 2 von Endnutzer-Transformatoren eines Stromnetzes und die Landnutzung, insbesondere hinsichtlich des Vorliegens von Parkbereichen, in dem abgedeckten räumlichen Gebiet 3. Falls verfügbar, können optional noch nützliche weitere Hintergrundinformationen bereitgestellt werden.

In einem Schritt S2 werden aus den geodätischen Daten Kandidatenpositionen 6, 7 ermittelt. Vorliegend werden als Kandidatenpositionen 6, 7 Parkbereiche aufgrund der Landnutzung ermittelt, die eine bestimmte Größe überschreiten. Es können auch weitere Anforderungen an Parkbereiche, die Kandidatenpositionen 6, 7 bilden, gestellt werden, beispielsweise die Zugehörigkeit zu einem interessierenden Ort. Zu den Kandidatenpositionen 6, 7 werden bereits hier Einschränkungen hinsichtlich der Zahl installierbarer Ladesäulen aufgrund deren Größe ermittelt, die als Randbedingungen in das Optimierungsproblem eingehen können bzw. den Lösungsraum beschränken können. Dabei sei bereits an dieser Stelle angemerkt, dass vorliegend Kandidatenlösungen nicht nur die Auswahl einer Kandidatenposition 6, 7 betreffen, sondern auch die Auswahl einer Zahl zu installierender Ladesäulen.

Dabei sei rein vorsorglich darauf hingewiesen, dass in üblichen Anwendungen räumliche Gebiete 3 betrachtet werden, die eine deutlich größere Anzahl an Endnutzer-Transformatoren und Kandidatenpositionen 6, 7 umfassen.

In einem Schritt S3 werden in einem Vorbereitungsvorgang deterministische Parameter des räumlichen Gebiets 3, die in die Formulierung des Optimierungsproblems eingehen sollen, durch Auswertung der geodätischen Daten (und, falls vorhanden, der wenigstens einen Hintergrundinformation) ermittelt. Dabei werden vorliegend sowohl deterministische Parameter ermittelt, die sich unmittelbar aus den geodätischen Daten ergeben, beispielsweise Laufwege, insbesondere Laufzeiten, von den Kandidatenpositionen 6, 7 zu interessierenden Orten und sonstige Ausdrücke, die keine Variablen involvieren, als auch Annahmen bzw. kompliziertere Herleitungen erfordernde deterministische Parameter.

Insbesondere werden vorliegend zwei Simulationen durchgeführt. Die erste Simulation betrifft den vorliegenden Ladebedarf, also die elektrischen Fahrzeuge, die zu laden sind. Hierbei wird auf abstrakte Weise, also ohne konkretes Verkehrswegenetz, in der ersten Simulation eine Statistik für die interessierenden Orte ermittelt, die die Zahl eintreffender elektrischer Fahrzeuge, den Ladezustand bei Eintreffen sowie die Aufenthaltsdauer beschreibt.

Die zweite Simulation betrifft die Auslastung des Stromnetzes. Hier wird insbesondere für die verschiedenen Endnutzer-Transformatoren, basierend auf der Landnutzung, ermittelt, wie viel Ladeleistung und Ladeenergie an ihnen zur Verfügung steht.

Insbesondere basierend auf den Ergebnissen wenigstens der ersten Simulation und den geodätischen Daten können im Rahmen des Schrittes S3 optional auch Lastzentren ermittelt werden. Eine an einer Kandidatenposition installierte Lastsäule kann wenigstens ein Lastzentrum ganz oder teilweise versorgen. In Abhängigkeit der Distanz kann eine Kandidatenposition auch mehrere Lastzentren bedienen. Auf diese Weise kann die Modellierung vereinfacht und der zur Lösung des Optimierungsproblems erforderliche Aufwand reduziert werden.

Sodann werden in den Schritten S4 und S5 Anteile eines Optimierungsmodells zur Definition des Optimierungsproblems ermittelt. Im Schritt S4 wird ein nichtstochastischer Anteil des Optimierungsmodells aus den deterministischen Parametern direkt ermittelt, während im Schritt S5 ein stochastischer Anteil unter Verwendung eines Szenario-Generators bestimmt wird. Dabei werden vorliegend auf Basis einer multinominalen Verteilung Submodellszenarien erstellt, die verschiedene Verbindungsmöglichkeiten von Kandidatenpositionen 6, 7 mit Endnutzer-Transformatoren beschreiben, was verschiedenen Werten für die unbekannten Parameter entspricht. Hierbei werden als Verteilungsparameter die Abstände zwischen den Endnutzer-Transformatoren und den Kandidatenpositionen 6, 7 sowie eine Verbindungsinformation herangezogen, der gemäß benachbarte Kandidatenpositionen 6, 7 mit hoher Wahrscheinlichkeit, insbesondere zumindest wenn eine Abstandsgrenze zwischen diesen unterschritten ist und/oder entsprechend einer gemäß einer Zerfallsfunktion nichtlinear abnehmenden Wahrscheinlichkeit, mit demselben Endnutzer-Transformator verbunden sind. Hierdurch werden in sich konsistente Submodellszenarien erhalten. Letztlich erfolgt also eine Szenario-Erzeugung für Verbindungen zwischen Kandidatenpositionen 6, 7 und Endnutzer-Transformatoren unter Verwendung des Abstands, beispielsweise unter Berücksichtigung der Abdeckungsbereiche 4, 5, sowie unter Berücksichtigung eines Nachbarschaftseffekts.

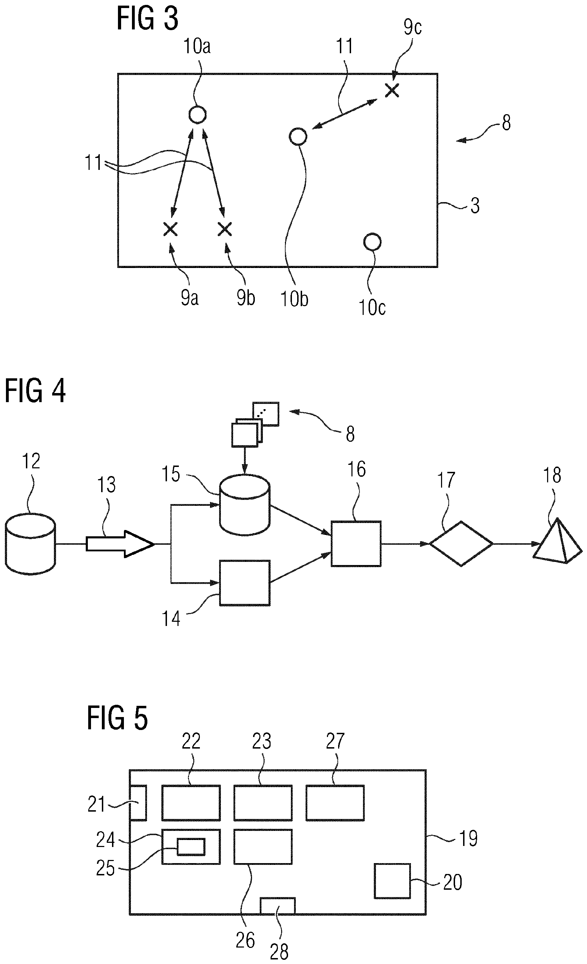

Fig. 3 zeigt beispielhaft auf vereinfachte Art und Weise ein solches Submodellszenario 8 im abgedeckten räumlichen Gebiet 3, mithin letztlich ein Verbindungszenario. Gezeigt sind mehrere Kandidatenpositionen 9a, 9b und 9c, sowie Positionen 10a, 10b und 10c von Endnutzer-Transformatoren. Verbindungen sind durch Doppelpfeile 11 dargestellt. Aufgrund des Nachbarschaftseffekts sind vorliegend die Kandidatenpositionen 9a, 9b beide mit dem Endnutzer-Transformator an der Position 10a verbunden. Die Kandidatenposition 9c ist mit dem Endnutzer-Transformator an der Position 10b verbunden, da diese recht nahe liegt. In anderen, hier denkbaren Submodellszenarien, die durch den Szenario-Generator erzeugt werden könnten, wäre es beispielsweise auch möglich, dass die Kandidatenpositionen 9a, 9b mit dem Endnutzer-Transformator an der Position 10b verbunden sind und/oder die Kandidatenposition 9c mit dem Endnutzer-Transformator an der Position 10c.

Nachdem die Submodellszenarien 8 durch den Szenario-Generator alle zumindest im Wesentlichen gleichwertig plausibel erzeugt werden, werden sie alle für den stochastischen Anteil gleich gewichtet (average sample weighting).

Es sei angemerkt, dass im Schritt S5 in die Generierung der Submodellszenarien 8 bzw. die Ermittlung des stochastischen Anteils neben den geodätischen Daten in anderen Ausführungsbeispielen auch deterministische Parameter und/oder Hintergrundinformationen eingehen können.

Sowohl im Schritt S4 als auch im Schritt S5 können beispielhaft Anteile der Kostenfunktion sowie Randbedingungen definiert werden. In einem Schritt S6 (vergleiche Fig. 2) werden die beiden Anteile aus den Schritten S4 und S5 dann zusammengefasst, um das Optimierungsproblem zu definieren. Die Kostenfunktion kann durch Zusammenführen der Kostenfunktionen der Anteile formuliert werden, die Randbedingungen werden kumulativ genutzt. Dabei sei an dieser Stelle noch angemerkt, dass sich die Kostenfunktion auf eine Maximierung des monetären Gewinns des installierenden Unternehmers bezieht.

In einem Schritt S7 wird mittels eines Lösungsalgorithmus, hier beispielhaft eines Sample Average Approximation-Algorithmus, das Optimierungsproblem gelöst. Das bedeutet, es wird die Lösung, umfassend eine Kandidatenposition 6, 7, 9a, 9b, 9c und eine Zahl zu installierender Ladesäulen, aufgefunden, die die Kostenfunktion, also den zu erwartenden Gewinn, maximiert. Die entsprechende Kandidatenposition 6, 7, 9a, 9b, 9c der optimalen Lösung ist dann der ermittelte Aufstellort. Die optimale Lösung kann in einem Schritt S8 ausgegeben werden. Hierbei wird das gesamte Ermittlungsverfahren computerimplementiert durchgeführt.

In einem erfindungsgemäßen Verfahren zum Aufstellen von Ladesäulen wird dann die Anzahl von Ladesäulen gemäß der optimalen Lösung an dem ermittelten Aufstellort installiert.

Fig. 4 erläutert nochmals illustrativ den Ablauf des Ermittlungsverfahrens. Es werden zunächst gemäß Schritt S1 die geodätischen Daten 12 bereitgestellt. Der Pfeil 13 illustriert die Ermittlung der Kandidatenpositionen 6, 7, 9a, 9b, 9c sowie den Vorbereitungsvorgang, Schritte S2 und S3. Die ermittelten deterministischen Parameter werden nun zur Parametrierung des nichtstochastischen Anteils 14 (Schritt S4) genutzt. Wenigstens die geodätischen Daten 12 werden zur Erzeugung des stochastischen Anteils 15 durch Generierung der Submodellszenarien 8, die entsprechend eingehen, verwendet, Schritt S5. Die Anteile 14, 15 werden dann als Optimierungsmodell zum Optimierungsproblem 16 zusammengesetzt (Schritt S6), welches durch den Lösungsalgorithmus 17 gelöst wird (Schritt S7), sodass die optimale Lösung 18 mit dem Aufstellort und der Anzahl zu installierender Ladesäulen erhalten wird.

Fig. 5 zeigt schließlich die funktionale Struktur einer erfindungsgemäßen Rechenvorrichtung 19, die zur Durchführung des Ermittlungsverfahrens der Fig. 2 ausgebildet ist. Die Rechenvorrichtung 19 weist ein Speichermittel 20 sowie einen hier nicht näher gezeigten Prozessor auf, der diverse Funktionseinheiten zur Durchführung des Verfahrens definiert.

Über eine Schnittstelle 21 können die geodätischen Daten 12 gemäß Schritt S1 erhalten werden. In einer Ermittlungseinheit 22 werden die Kandidatenpositionen 6, 7, 9a, 9b, 9c gemäß Schritt S2 ermittelt, während in einer Vorbereitungseinheit 23 das Ableiten der deterministischen Parameter gemäß Schritt S3 erfolgt. In einer Modellierungseinheit 24 erfolgt die Ermittlung der Anteile 14 und 15 gemäß der Schritte S4 und S5, wobei zur Erzeugung der Submodellszenarien 8 die Modellierungseinheit 24 auch einen Szenario-Generator 25 umfasst. Die Rechenvorrichtung 19 umfasst ferner eine Definitionseinheit 26 zur Formulierung des Optimierungsproblems 16 gemäß Schritt S6 und eine Optimierungseinheit 27 zur Durchführung des Optimierungsvorgangs und somit Lösung des Optimierungsproblems 16 gemäß Schritt S7. Über eine weitere Schnittstelle 28 kann das Optimierungsergebnis, also die optimale Lösung 18, umfassend den Aufstellort, ausgegeben werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Computerimplementiertes Verfahren zur Ermittlung eines Aufstellortes für wenigstens eine Ladesäule für elektrische Fahrzeuge in einem abgedeckten räumlichen Gebiet (3), insbesondere einem Stadtgebiet, wobei ein Optimierungsproblem (16) mit einer zu optimierenden Kostenfunktion formuliert und in einem Optimierungsvorgang zur Ermittlung des Aufstellortes gelöst wird, aufweisend folgende Schritte:
- Bereitstellen von geodätischen Daten (12), die die Positionen bereits installierter Ladesäulen, die Positionen von Orten von Interesse, die Positionen (1, 2, 10a, 10b, 10c) von Endnutzer-Transformatoren eines Stromnetzes und die Landnutzung, insbesondere hinsichtlich des Vorliegens von Parkbereichen, in dem Gebiet (3) beschreiben,
- Ermittlung von Kandidatenpositionen (6, 7, 9a, 9b, 9c) für den Aufstellort aus den geodätischen Daten (12),
- in einem Vorbereitungsvorgang Ableiten von deterministischen Parametern aus den geodätischen Daten (12), die neben wenigstens einem unbekannten Parameter, der nicht aus den geodätischen Daten (12) herleitbar ist, in die Kostenfunktion eingehen, für die Kandidatenpositionen (6, 7, 9a, 9b, 9c), und
- Definieren des Optimierungsproblems (16) aus den deterministischen Parametern und dem wenigstens einen unbekannten Parameter,
- wobei zur Berücksichtigung des wenigstens einen unbekannten Parameters ein stochastisches Optimierungsverfahren angewendet wird.

2. Verfahren nach Anspruch 1, **dadurch gekennzeichnet, dass** ein zweistufiges stochastisches Optimierungsverfahren verwendet wird, bei dem in der ersten Stufe wenigstens eine Kandidatenposition (6, 7, 9a, 9b, 9c) gewählt wird und in der zweiten Stufe bei Nichterfüllbarkeit von Anforderungen durch das Stromnetz und/oder von Anforderungen bezüglich zu ladender Fahrzeuge ein, insbesondere auf der Verwendung einer Backstop-Technologie basierender, Strafterm in der Kostenfunktion verwendet wird.

3. Verfahren nach Anspruch 2, **dadurch gekennzeichnet, dass** zusätzlich zu der Kandidatenposition (6, 7, 9a, 9b, 9c) wenigstens eine weitere Größe, die die durch die wenigstens eine Ladesäule bereitstellbare Ladeleistung beschreibt, in der ersten Stufe gewählt wird, wobei die weitere Größe insbesondere eine Zahl von Ladesäulen betrifft.

4. Verfahren nach Anspruch 3, **dadurch gekennzeichnet, dass** im Rahmen der Ermittlung der Kandidatenpositionen (6, 7, 9a, 9b, 9c) und/oder des Vorbereitungsvorgangs wenigstens eine Beschränkung für wenigstens eine der wenigstens einen weiteren Größe ermittelt und bei der Definition des Lösungsraums und/oder des Optimierungsproblems (16) berücksichtigt wird.

5. Verfahren nach einem der vorangehenden Ansprüche, **dadurch gekennzeichnet, dass** zur Ermittlung der Kandidatenpositionen (6, 7, 9a, 9b, 9c) und/oder der deterministischen Parameter wenigstens eine Hintergrundinformation, insbesondere betreffend die Nutzung von elektrischen Kraftfahrzeugen oder betreffend die Nutzung des Stromnetzes, verwendet wird und/oder dass zur Ermittlung wenigstens eines Teils der deterministischen Parameter wenigstens eine Simulation basierend auf den geodätischen Daten (12) durchgeführt wird.

6. Verfahren nach Anspruch 5, **dadurch gekennzeichnet, dass** wenigstens eine Simulation gewählt aus der Gruppe umfassend
- eine Simulation des elektrische Fahrzeuge betreffenden Verkehrs und/oder von deren Ladezuständen und/oder von Aufenthaltszeiten, insbesondere bezogen auf die Orte von Interesse, und
- eine Simulation zur Auslastung des Stromnetzes, insbesondere bezüglich der zeitabhängig für Ladevorgänge von elektrischen Fahrzeugen bereitstehenden Leistung,
durchgeführt wird.

7. Verfahren nach einem der vorangehenden Ansprüche, **dadurch gekennzeichnet, dass** der wenigstens eine unbekannte Parameter einen auf die Leistungsversorgung aus dem Stromnetz bezogenen Parameter, insbesondere einen Parameter, der einen Endnutzer-Transformator, an den die Kandidatenposition (6, 7, 9a, 9b, 9c) angeschlossen ist, beschreibt.

8. Verfahren nach einem der vorangehenden Ansprüche, **dadurch gekennzeichnet, dass** das Optimierungsproblem (16) auf der Grundlage eines Optimierungsmodells definiert wird, welches einen nichtstochastischen, aus den deterministischen Parametern unmittelbar ermittelbaren Modellanteil (14) und einen stochastischen Modellanteil (15), der in einem Modellierungsvorgang ermittelt wird, umfasst.

9. Verfahren nach Anspruch 8, **dadurch gekennzeichnet, dass** in dem Modellierungsvorgang, insbesondere basierend auf einer multinominalen Verteilung, Submodellszenarien (8) für verschiedene Werte des wenigstens einen unbekannten Parameters, alle Kandidatenpositionen (6, 7, 9a, 9b, 9c) und das gesamte räumliche Gebiet (3) erzeugt und zur Bildung des stochastischen Anteils (15) gewichtet kombiniert werden.

10. Verfahren nach Anspruch 9, **dadurch gekennzeichnet, dass** bei Verwendung von Parametern, die einen Endnutzer-Transformator, an den eine jeweilige Kandidatenposition (6, 7, 9a, 9b, 9c) angeschlossen ist, beschreiben, als unbekannte Parameter, zur Erzeugung der Submodellszenarien (8), insbesondere als Verteilungsparameter der multinominalen Verteilung,
- Abstände von Kandidatenpositionen (6, 7, 9a, 9b, 9c) zu Endnutzer-Transformatoren, und
- Verbindungsinformationen hinsichtlich der Endnutzer-Transformationen für weitere, benachbarte Kandidatenpositionen (6, 7, 9a, 9b, 9c),
verwendet werden.

11. Verfahren nach einem der vorangehenden Ansprüche, **dadurch gekennzeichnet, dass** die Kostenfunktion zur Maximierung eines monetären Ertrags und/oder zur Minimierung der monetären Kosten formuliert wird und/oder zur Lösung des Optimierungsproblems (16) ein Sample Average Approximation-Verfahren verwendet wird und/oder das Optimierungsproblem (16) umfassend wenigstens eine, insbesondere wenigstens teilweise durch deterministische und/oder unbekannte Parameter definierte und/oder als Bestandteil der Modellanteile (14, 15) ermittelte, Randbedingung formuliert bzw. definiert werden.

12. Verfahren zum Aufstellen von Ladesäulen an wenigstens einem Aufstellort innerhalb eines räumlichen Gebiets (3), insbesondere eines Stadtgebiets, **dadurch gekennzeichnet, dass** der wenigstens eine Aufstellort durch ein Verfahren nach einem der vorangehenden Ansprüche ermittelt wird.

13. Rechenvorrichtung (19), aufweisend wenigstens einen Prozessor und wenigstens ein Speichermittel (20) und ausgebildet zur Durchführung eines Verfahrens nach einem der Ansprüche 1 bis 11.

14. Computerprogramm, welches bei Ausführung auf einer Rechenvorrichtung (19) diese veranlasst, die Schritte eines Verfahrens nach einem der Ansprüche 1 bis 11 durchzuführen.

15. Elektronisch lesbarer Datenträger, auf dem ein Computerprogramm nach Anspruch 14 gespeichert ist.
